# EUROPÄISCHE PATENTSCHRIFT

(11) **EP 3 472 370 B1**
(45) Veröffentlichungstag und Bekanntmachung des Hinweises auf die Patenterteilung: **06.11.2019**
(21) Anmeldenummer: 18730972.9
(22) Anmeldetag: 11.06.2018
(51) Int. Cl.: C25B 1/00, C25B 1/10, C25B 9/18, C25B 15/08, C10K 3/02, C10K 3/04

(54) **SYNTHESEGASERZEUGUNG AUS CO2 UND H2O IN EINER CO-ELEKTROLYSE**
GENERATION OF SYNTHESIS GAS FROM CO2 AND H2O IN A CO-ELECTROLYSIS
PRODUCTION DE GAZ DE SYNTHÈSE À PARTIR DE CO2 ET H2O DANS UNE CO-ÉLECTROLYSE

(30) Priorität: 12.06.2017 EP 17175568
(43) Veröffentlichungstag der Anmeldung: 24.04.2019
(73) Patentinhaber: SunFire GmbH, 01237 Dresden (DE)
(72) Erfinder: RÜGER, Dietmar, 01728 Bannewitz (DE)
(74) Vertreter: Hansen, Jochen
(86) Internationale Anmeldenummer: PCT/DE2018/100554
(87) Internationale Veröffentlichungsnummer: WO 2018/228643

(56) Entgegenhaltungen:
- US-A1- 2014 288 195
- SEVERIN R. FOIT ET AL: "Power-to-Syngas: An Enabling Technology for the Transition of the Energy System?", ANGEWANDTE CHEMIE INTERNATIONAL EDITION, Bd. 56, Nr. 20, 21. April 2017 (2017-04-21), Seiten 5402-5411, XP055405367, ISSN: 1433-7851, DOI: 10.1002/anie.201607552

## Beschreibung

Die Erfindung betrifft ein Synthesegaserzeugungsverfahren aus CO₂ und H₂O mit einer Co-Elektrolyse, wobei der CO₂- und CH₄-Gehalt des erzeugten Gases auf der Kathodenseite verringert werden soll.

Ferner betrifft die Erfindung eine Synthesegaserzeugungsanordnung zur Erzeugung von Synthesegas aus CO₂ und H₂O mit einer Co-Elektrolyse und mit dem entsprechenden Synthesegaserzeugungsverfahren mit wenigstens einem Elektrolyse-Stack.

Eine Hochtemperaturelektrolysezelle, nämlich eine Solid Oxide Electrolysis Cell, auch SOEC abgekürzt, zur Erzeugung von H₂- und CO-haltigen Gasen aus H₂O und CO₂ durch Elektrolyse (Co-Elektrolyse) arbeitet heute bei maximalen Prozesstemperaturen von ca. 850-865 °C. Höhere Prozesstemperaturen sind bei einer SOEC vor allem aus materialtechnischen Gründen zurzeit noch nicht möglich.

Um beispielsweise Verdichterleistung für die Bereitstellung des erzeugten Gases unter Druck für eine nachfolgende Synthese zu sparen, werden Co-Elektrolysen auch für höhere Prozessdrücke entwickelt.

Die Produktgaszusammensetzung wird neben dem Mengenverhältnis der beiden Feedgasströme H₂O und CO₂ und der Stromdichte, die den Wasserdampfzersetzungsgrad beeinflusst, wesentlich vom temperatur- und druckabhängigen chemischen Gleichgewicht der Produktgaskomponenten CO, CO₂, H₂, H₂O und CH₄ bestimmt.

Folgende Reaktionen beschreiben das chemische Gleichgewicht:

CO + H₂O ←→ CO₂ + H₂ ΔH_{R}= -41,2 kJ/mol (R1)

CO + 3 H₂ ←→ CH₄ + H₂O ΔH_{R}= -206,2 kJ/mol (R2)

Für einen Einsatz des in der Elektrolyse erzeugten Gases in einer Synthese, sind möglichst niedrige Konzentrationen von CO₂ und CH₄ im Synthesegas erwünscht, da diese Gasbestandteile in der Regel nicht an der Synthesereaktion teilnehmen und somit zu einer schlechten C- und H₂-Ausnutzung, zu einer Verschlechterung des Wirkungsgrades und letztendlich zu einer Verringerung des CO-Umsatzes führen.

So kann beispielsweise bei der Fischer-Tropsch-Synthese eine Anreicherung von CO₂ und CH₄ neben der schlechteren C- und H₂-Ausnutzung des Synthesegases auch eine unerwünschte Verschiebung der Produktverteilung hin zu leichteren Produkten und die Bildung von unerwünschten Produkten zur Folge haben.

Bei der Methanolsynthese führt die Anreicherung von Methan im Synthesekreislauf ebenfalls zu einer schlechteren C- und H₂-Ausnutzung.

Um geringe CO₂- und CH₄-Gehalte im Synthesegas zu erreichen, sind aber hohe Temperaturen (R1, R2) und niedrige Drücke (R2) erforderlich.

Die Erfindung befasst sich damit, wie trotz Temperaturbeschränkung bei der Co-Elektrolyse und hohen Prozessdrücken Synthesegase mit geringeren CO₂- und CH₄-Gehalten erzeugt werden können als beim Stand der Technik.

Die Erzeugung von Synthesegas in einer Co-Elektrolyse ist im **Stand der Technik** bekannt, jedoch ein relativ neues Verfahren mit wenig praktischen Anwendungen. Erste Überlegungen wurden von der NASA im Zusammenhang mit der Sauerstofferzeugung auf dem Mars angestellt (G. Tao, K.R. Sridhar, D.L. Chan, Study of carbon dioxide electrolysis at electrode/ electrolyte interface: part I. Pt/YSZ interface, Solid State lonics, 175 (1994), 615-619).

Die Qualität des erzeugten Gases wird neben dem H₂O- und CO₂-Zersetzungsgrad der Elektrolyse vor allem durch das von der Temperatur und dem Druck bestimmten chemischen Gleichgewicht beeinflusst. Eine darüber hinaus gehende Beeinflussung der Gasqualität in der Co-Elektrolyse ist nicht bekannt.

In der Schrift "Production of Fischer-Tropsch liquid fuels from high temperature solid oxide co-electrolysis unit", W.L. Becker, R.J. Braun, M. Penev, M. Melaina, Energy 47, (2012), 99-115, wird empfohlen, um den CH₄-Gehalt im Synthesegas für eine Fischer-Tropsch-Synthese nicht zu hoch ansteigen zu lassen, die Co-Elektrolyse bei einer Temperatur von 800 °C und bei einem Druck von 1 bis 2 bar zu betreiben. Unter diesen Bedingungen werden für ein Synthesegas mit einem H₂-CO-Molverhältnis von 2,1 CO₂-Gehalte von <10 Mol-% und CH₄-Gehalte von < 0,5 Mol-% jeweils im wasserfreien Gas erreicht.

Wie bereits einleitend ausgeführt, arbeitet eine Hochtemperaturelektrolysezelle, kurz SOEC (Solid Oxide Electrolysis Cell), zur Erzeugung von H₂- und CO-haltigen Gasen aus H₂O und CO₂ durch Elektrolyse (Co-Elektrolyse) heute bei maximalen Prozesstemperaturen von ca. 850-865 °C, da vor allem die zur Abdichtung der Gasräume eingesetzten Gläser sowie die im Stack zum Einsatz kommenden Metalle aus materialtechnischen Gründen höhere Prozesstemperaturen nicht zulassen.

Die Entwicklung der vollkeramischen Brennstoffzelle/ Elektrolysezelle (I. Wærnhus, A. Vik, C.S. Ilea, S. Faaland: "Development of an All Ceramic SOFC", ECS Transactions, 35 (1), 403-407 (2011)) verspricht Prozesstemperaturen bis zu ca. 1.200 °C. Allerdings ist die Fertigung dieser Brennstoffzelle/ Elektrolysezelle aufgrund der geforderten Fertigungstoleranzen schwierig und insbesondere sehr kostenintensiv.

Eine Verbesserung der Gasqualität nach der Elektrolyse ist durch Anwendung von bekannten Technologien zur Gasreinigung und Gastrennung durchaus möglich.

Zur Entfernung von CO₂ aus Synthesegasen kommen nach dem Stand der Technik chemische Wäschen, wie MEA, MDEA, etc., physikalische Wäschen, wie Druckwasserwäsche, Rectisolwäsche, etc., Druckwechselverfahren, Membrantrennverfahren etc. zur Anwendung.

Zur Entfernung vom CH₄ aus Synthesegasen kommen auch Membranverfahren zum Einsatz.

Aus der Druckschrift EP 2 491 998 B1 ist bekannt, einen RWGS-Prozess zur Erzeugung von Synthesegas aus CO₂ und Wasserstoff zu verwenden. In diesem Prozess wird unter Ausnutzung der reversen Wasser-Gas-Shift-Reaktion (RWGS) CO₂ und H₂ in CO und H₂O umgewandelt. Um niedrige CO₂- und CH₄-Gehalte im erzeugten Gas zu erzielen, sind hohe Prozesstemperaturen erforderlich.

In M. Boder, R. Dittmeyer: "Catalytic modification of conventional SOFC anodes with a view to reducing their activity for direct internal reforming of natural gas", Journal of Power Sources, Vol.155, Issue 1, 18.4.2006, S. 13-22, wird vorgeschlagen, die bei der Festoxid-Brennstoffzelle (SOFC) durch die endotherme, direkte interne Reformierungsreaktion des Methans mit Wasserdampf auftretende Abkühlung und die damit verbundenen Wärmespannungen, Wirkungsgradverluste und Verschlechterung der Lebensdauer der Brennstoffzelle durch Einsatz von mit weniger aktiven Metallen, wie z.B. Kupfer, abgedeckten konventionellen, nickelhaltigen Werkstoffen, zu unterdrücken.

Weiter offenbart die Druckschrift US 2014/0288195 A1 ein Verfahren zur thermochemischen Umwandlung eines kohlenstoffbasierten Ausgangsmaterials in Synthesegas, das überwiegend Wasserstoff H₂ und Kohlenmonoxid CO enthält, wobei die folgenden Schritte umfasst sind, nämlich a) Oxidverbrennung des kohlenstoffhaltigen Ausgangsmaterials zur Erzeugung einer Kraft-Wärme-Kopplung; b) Hochtemperaturelektrolyse von Wasser mindestens ausgehend von der gemäß Schritt a) erzeugten Wärme; und c) Umkehrung der Wasser-Gas-Shift-Reaktion ausgehend von dem gemäß Schritt a) erzeugten Kohlendioxid CO2 und aus dem nach Schritt b) erzeugten Wasserstoff H2.Ferner ist aus der Druckschrift "Power-to-Syngas: An Enabling Technology fort he Transition of the Energy System?", Angewandte Chemie International Edition, Bd. 56, Nr. 20, 21. April 2017 (2017-04-21), Seiten 5402-5411, XP055405367, ISSN: 1433-7851, DOI: 10.1002/ anie.201607552 ein Synthesegaserzeugungsverfahren aus C0₂ und H₂0 mit einer Co-Elektrolyse bekannt, wobei der C0₂- und CH₄-Gehalt des erzeugten Gases auf der Kathodenseite verringert wird, wobei ferner noch die Verwendung von Ni-haltigen Kathoden, die an diesen Kathoden bei hohen Temperaturen ablaufende RWGS Reaktion sowie die Bedeutung der RWGS Reaktion für die C02 Reduktion bei der Co-Elektrolyse offenbart ist.

**Nachteilig** an den im Stand der Technik bekannten Co-Elektrolysen ist es, dass diese an die thermodynamischen Bedingungen am Gasaustritt aus dem Stack der Co-Elektrolyse, nämlich insbesondere Druck und Temperatur, die die Gaszusammensetzung bestimmen, gebunden sind. Die Folge ist ein relativ hoher CO₂- und CH₄-Gehalt im erzeugten Synthesegas, insbesondere bei höheren Prozessdrücken.

Hinzu kommt, dass der H₂O- und CO₂-Zersetzungsgrad in der Elektrolysezelle nicht zu hoch sein darf, da sonst der oxydische Elektrolyt reduziert wird, und es zu unerwünschten Veränderungen der elektrischen Leitfähigkeit und der Materialfestigkeit kommt. Damit verbleibt prozessbedingt ein Restgehalt an CO₂ und H₂O im Gas, wobei der Dampfanteil durch Kondensation bei der Gasabkühlung leicht abgetrennt werden kann. Übliche H₂O- bzw. CO₂-Zersetzungsgrade in SOC-Elektrolysen liegen bei ca. 80 %.

Höhere CO₂- und CH₄-Gehalte im Synthesegas binden Kohlenstoff und Wasserstoff, der in der nachfolgenden Synthese nicht an der chemischen Reaktion teilnimmt und sich somit nicht zum gewünschten Produkt umsetzen kann. Die Folgen sind geringere Produktausbeuten und Wirkungsgradverlust.

In einer Fischer-Tropsch-Synthese des Standes der Technik an Kobaltkatalysatoren wird zur Erhöhung des CO-Umsatzes und der Produktausbeute das Reaktionsrestgas mit Hilfe eines Verdichters rezirkuliert und dem Synthesereaktor erneut zugeführt. Da CO₂ und CH₄ nicht an der Fischer-Tropsch-Reaktion teilnehmen, reichern sich diese Gase im Kreislaufgas an, erhöhen den Verdichtungsaufwand und reduzieren den Partialdruck der Synthesegaskomponenten CO und H₂ im Kreislaufgas, was zu einer Verringerung der Produktausbeute und zu einer Veränderung der Produktzusammensetzung, nämlich mehr leichte Produkte, führt. Um eine zu starke Anreicherung von CO₂ und CH₄ im Kreislaufgas zu vermeiden, wird ein Teil des Gases, das sogenannte Purgegas aus dem Kreislauf abgeführt. Dieses abgeführte Gas enthält neben CO₂ und CH₄ entsprechend der Konzentration im Gaskreislauf auch die Synthesegaskomponenten CO und H₂, was eine weitere Verschlechterung der Gasausnutzung und Verringerung der Produktausbeute zur Folge hat.

Bei der Methanolsynthese führt die Anreicherung von Methan im Synthesekreislauf ebenfalls zu einer schlechteren C- und H₂-Ausnutzung, da Methan und entsprechend der Gaskonzentration im Kreislauf auch Kohlenstoffmonoxid und Wasserstoff aus dem Kreislauf abgeführt werden muss.

Um CO₂ und CH₄ nachträglich mit Hilfe von Gasreinigungs- und/oder -trennverfahren des Standes der Technik aus dem Synthesegas zu entfernen, sind teure und aufwendige Technologien erforderlich.

Beim Sunfire-Verfahren gemäß der Druckschrift EP 2 491 998 B1 zur Erzeugung von Synthesegas aus CO₂ und Wasser mit Hilfe von Elektroenergie wird zunächst Wasserstoff in einer Wasserdampfelektrolyse erzeugt, der anschließend zum Teil eingesetzt wird, um CO₂ entsprechend der reversen Wassergas-Shift-Reaktion (RWGS-Reaktion) zu reduzieren und CO zu erzeugen.

Bei diesem Verfahren muss in der Wasserdampfelektrolyse im Gegensatz zur Co-Elektrolyse zusätzlicher Wasserstoff erzeugt werden, um den im anschließenden RWGS-Reaktor durch chemische Reaktion vom CO₂ abgetrennten Sauerstoff in Form von Wasser zu binden und aus dem Prozess herauszubringen:

| | | |
|---|---|---|
| H₂O-Elektrolyse: | 3 H₂O | → 3 H₂ + 1,5 O₂ |
| RWGS-Reaktion: | CO₂ + 3 H₂ | → CO + 2 H₂ + H₂O |
| Netto-Reaktion: | 2 H₂O + CO₂ | → CO + 2 H₂ + 1,5 O₂ |

| Co-Elektrolyse: | | |
|---|---|---|
| H₂O-Elektrolyse: | 2 H₂O | → 2 H₂ + 1 O₂ |
| CO₂-Elektrolyse: | CO₂ | → CO + 0,5 O₂ |
| Netto-Reaktion: | 2 H₂O + CO₂ | → CO + 2 H₂ + 1,5 O₂ |

Weiterhin muss der in der Wasserdampfelektrolyse bei ca. 850 °C erzeugte Wasserstoff abgekühlt werden, bevor er im RWGS-Reaktor eingesetzt werden kann, nicht zuletzt um den sich negativ auf die Synthesegasqualität auswirkenden Restwasserdampf aus dem Wasserstoff zu entfernen.

Dort wird er dann zusammen mit dem CO₂ wieder auf Prozesstemperatur aufgeheizt. Durch die Wasserstoffkühlung geht dem Gesamtprozess Wärme verloren, was sich negativ auf den Wirkungsgrad des Gesamtprozesses auswirkt.

Um den CO₂- und CH₄-Gehalt im Synthesegas nach der Co-Elektrolyse zur reduzieren, wird zur Verbesserung und **Lösung** vorgeschlagen, das ca. 850 °C heiße Gas nach dem Stack der Co-Elektrolyse mit Hilfe eines mit Elektroenergie betriebenen Heizers auf ca. 1.000 bis 1.100 °C aufzuheizen und anschließend über einen Katalysator zu geben, der die reverse Wassergas-Shift-Reaktion (RWGS)

CO₂ + H₂ → CO + H₂O ΔH_{R}= +41,2 kJ/mol (R3)

und die Steam-Reforming-Reaktion

CH₄ + H₂O → CO + 3 H₂ ΔH_{R}= +206,7 kJ/mol (R4)

begünstigt.

Ein solcher Katalysator ist z.B. ein nickelhaltiger Katalysator, wie er für Steam Reforming-Anlagen eingesetzt wird.

Da es sich dabei um endotherme Reaktionen handelt, kühlt sich das Gas während der Reaktion am Katalysator ab. Erforderlichenfalls müssen weitere Heizer-/ Reaktor-Stufen folgen, bis die gewünschte Reaktionsendtemperatur, von bevorzugt oder beispielsweise 950 °C oder höher, erreicht wird, die eine ausreichend niedrige CO₂- und CH₄-Konzentration ermöglicht.

Sinnvoll und denkbar sind auch andere Heizer-Reaktor-Varianten, wie z.B. ein kontinuierlich mit Elektroenergie beheiztes Reaktorbett.

Es ist auch möglich, dass aufgeheizte Gas nach dem Stack nicht einem Katalysatorbett sondern einem Koksbett zuzuführen.

Folgende chemische Reaktionen finden am Koksbett statt:

CO₂ + C **→** 2 CO ΔH_{R}= +172,5 kJ/mol (R5)

H₂O + C **→** CO + H₂ ΔH_{R}= +132,0 kJ/mol (R6)

H₂ + C **→** CH₄ ΔH_{R}= - 74,9 kJ/mol (R7)

Damit wird neben Wasserdampf vor allem das unerwünschte CO₂ umgesetzt, was zu geringeren CO₂-Konzentrationen im Synthesegas führt. Die exotherme heterogene Methanbildung (R7) ist hier von untergeordneter Bedeutung.

Der Koks wird dabei verbraucht und muss regelmäßig ersetzt werden.

Eine höhere Endtemperatur und damit geringere CO₂- und CH₄-Gehalte im Gas kann auch erreicht werden, wenn dem SOEC-Stack des Standes der Technik mit CO₂/H₂O-Umsätzen von < 80 % ein zweiter z.B. vollkeramischer Stack, der für höhere Prozesstemperaturen geeignet ist, nachgeschalten wird, indem der restliche Umsatz bei höheren Temperaturen als im SOEC-Stack erfolgt. Der SOEC-Stack des Standes der Technik und der kleinere und damit leichter zu fertigende vollkeramische Stack sind preisgünstiger als ein großer vollkeramischer Stack, was wirtschaftliche Vorteile mit sich bringt.

Es wird weiterhin vorgeschlagen, durch Zuführung von zusätzlichem Wasserstoff zum Stack der Elektrolyse das chemische Gleichgewicht der Reaktion (R3) dahingehend zu beeinflussen, dass durch den Wasserstoffüberschuss ein höherer CO₂-Umsatz erreicht wird. Dabei muss beachtet werden, dass durch den Wasserstoffüberschuss auch das chemische Gleichgewicht der Reaktion (R4) zugunsten der Bildung von Methan verschoben wird. Der überschüssige Wasserstoff wird nach Abkühlung des Synthesegases bis zum gewünschten H₂-CO-Molverhältnis durch geeignete Vorrichtungen aus dem Gas abgetrennt und zur wiederholten Nutzung zum Stack zurückgeführt.

Um den Gesamt-CO₂/H₂O-Umsatz in der Elektrolyse zu erhöhen und damit geringere CO₂-Gehalte im Synthesegas zu erzielen, wird weiterhin vorgeschlagen, Wasserstoff und Kohlenstoffmonoxid aus dem Gasgemisch nach dem SOEC-Stack bei hohen Temperaturen durch eine geeignete Vorrichtung, beispielsweise einer keramischen Membran, abzutrennen und das verbleibende angereicherte H₂O-CO₂-Gemisch einem weiteren SOEC-Stack zuzuführen, um das H₂O-CO₂-Gemisch weiter elektrolytisch zu zerlegen. Nach der Abkühlung beider Gasströme werden diese wieder zum fertigen Synthesegas gemischt. Damit können insgesamt höhere Umsätze als bei einem einmaligen Durchgang durch einen Stack erreicht werden.

Weiterhin wird vorgeschlagen, die Wasserdampf- und die CO₂-Elektrolyse in getrennten Elektrolyseapparaten durchzuführen und die erzeugten Produktgase Wasserstoff und Kohlenstoffmonoxid erst nach der Gasabkühlung im gewünschten Verhältnis zu mischen. Damit wird Methanbildung verhindert und das erzeugte Synthesegas ist somit methanfrei.

Da insbesondere bei höheren Drücken die Methanbildung zunimmt, wird vorgeschlagen, dass im Stack Materialien eingesetzt werden oder eingesetzte konventionelle Materialien durch Beschichtung mit weniger aktiven Materialien behandelt werden, um die durch die nickelhaltigen Werkstoffe unterstützte katalytische Methanbildung zu vermeiden und damit die Methanbildung zu unterdrücken.

Synthesegaserzeugungsverfahren aus CO₂ und H₂O mit einer Co-Elektrolyse (9),
wobei der CO₂- und CH₄-Gehalt des erzeugten Gases (18) auf der Kathodenseite (17) verringert wird, ist dadurch gekennzeichnet, dass hierzu nach der Co-Elektrolyse (9) das Gas (18) der Kathodenseite, enthaltend H₂, CO, nicht umgesetzten Wasserdampf und CO₂ sowie CH₄, zusätzlich wenigstens einem die reverse Wasser-Gas-Shift-Reaktion R3 und die Steam-Reforming-Reaktion R4 begünstigenden katalytischen Reaktor (20, 24) und/oder wenigstens einem die Reaktionen R5 und R6 und R7 begünstigenden mit Koks gefüllten Behälter (20, 24) zugeführt wird,
mit:

R3: CO₂ + H₂ → CO + H₂O

R4: CH₄ + H₂O → CO + 3H₂

R5: CO₂ + C → 2 CO

R6: H₂O + C → CO + H₂

R7: 2 H₂ + C → CH₄

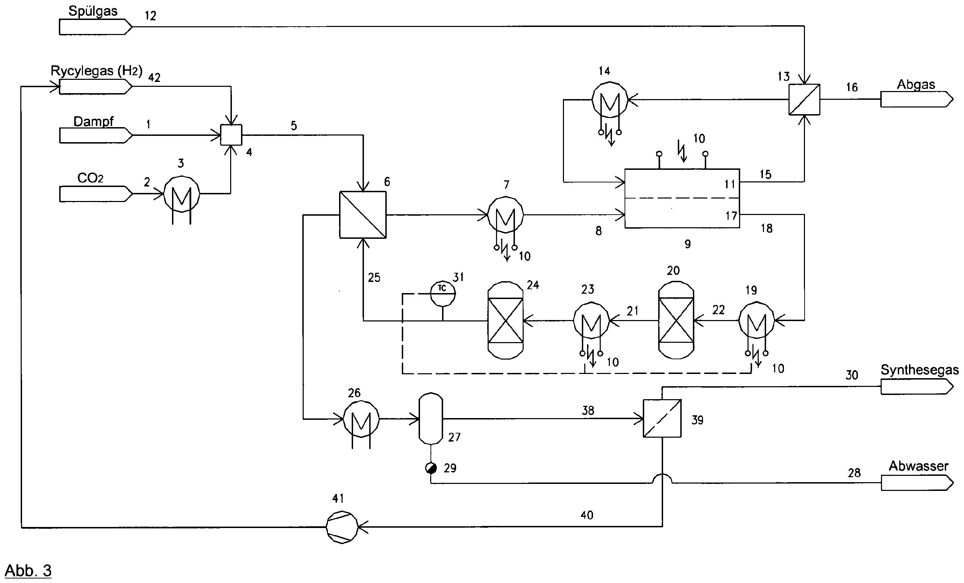

wobei beim Zuführen zu dem wenigstens einen katalytischen Reaktor (20, 24) und/oder wenigstens einem mit Koks gefüllten Behälter (20, 24) ein Vorheizen mittels wenigstens eines mit Elektroenergie betriebenen Heizers (19, 23) erfolgt.In einer besonders bevorzugten Ausführungsform kann nach dem / den katalytischen Reaktoren und/oder dem / den mit Koks gefüllten Behältern eine nach einem Abkühlen des Gases eine wenigstens teilweise Gasabtrennung von H₂ oder H₂-reichem Gas aus dem Gasgemisch erfolgen, wobei das abgetrennte und mit H₂ angereicherte Gas zu der Kathodenseite des Elektrolyse-Stack recycelt wird. Diese Ausführungsform kann auch unabhängig von dem / den katalytischen Reaktoren und/oder dem / den mit Koks gefüllten Behältern durchgeführt werden, wobei hierzu exemplarisch auf Fig.3 hingewiesen wird, nämlich die Variante bei 850°C und entsprechend Tabelle 5.

Als Abtrennvorrichtung kann in einer bevorzugten Variante eine Membrantrennanlage und/oder eine Druckwechselabsorptionsanlage verwendet werden.

Insbesondere kann in einer Ausführungsvariante das Vorheizen mittels eines Vorheizers erfolgen, wobei dieser insbesondere bevorzugt Bestandteil des katalytischen Reaktors ist bzw. sein kann.

Eine bevorzugte Ausführungsform ist gegeben, wenn nach dem Zuführen zu dem wenigstens einen die reverse Wasser-Gas-Shift-Reaktion R3 und / oder die Steam-Reforming-Reaktion R4 begünstigenden katalytischen Reaktor (20, 24) und/oder wenigstens dem einen mit Koks gefüllten Behälter (20, 24), in dem die Reaktionen R5 und/oder R6 und/oder R7 ablaufen, ein Zuführen zusätzlich über
- einen vollkeramischen Stack, der bei höheren Temperaturen als der erste Stack betrieben wird, erfolgt, wobei der vollkeramische Stack kleiner dimensioniert ist als der erste Elektrolyse-Stack
   oder
- einen zweiten Elektrolyse-Stack, der bei dem gleichen Temperaturniveau wie der erste Elektrolyse-Stack betrieben wird, erfolgt.

Vor der Zuführung des Gases zu dem vollkeramischen Stack kann das Gas einer oder mehreren Temperaturerhöhungen und/oder einem oder mehreren elektrischen Heizern zugeführt werden. Insbesondere können diesbezügliche Temperaturerhöhungsstufen in Form von Rekuperatoren genutzt werden, so dass die bei der teilweise notwendigen Gaskühlung anfallende Wärme sehr effizient genutzt wird, um das zu erwärmende Gas aufzuheizen.

Vor der Zuführung des Gases zu dem vollkeramischen Stack, dem zweiten Elektrolyse Stack oder einer etwaig vorgesehenen Temperaturerhöhung und/oder einem elektrischen Heizer kann das Gas einer für höhere Temperaturen, etwa oder insbesondere dem Temperaturniveau des ersten Elektrolyse Stack entsprechenden, geeigneten Gastrennvorrichtung zugeführt werden, wobei aus dem vollkeramischen Stack oder der etwaig vorgesehenen Temperaturerhöhung und/oder dem elektrischen Heizer zuzuführenden Gas ein hoher, das heißt insbesondere bis zu 100 % im Idealfall, aber auch schon kleine Mengen,Anteil an CO und H₂ als Gas abgetrennt wird und als Synthesegas zusammen mit dem aus dem vollkeramischen Stack oder dem zweiten Elektrolyse Stack erzeugten Gas zur weiteren Verarbeitung zur Verfügung gestellt wird. In einer bevorzugten Ausführungsform wird als Gastrennvorrichtung eine keramische Membran verwendet.

Der CO₂- und CH₄-Gehalt des Gases der Kathodenseite können verringert werden, wobei hierzu eine getrennte CO₂ und H₂O-Elektrolyse durchgeführt wird, wobei CO₂ und ein optionales Spülgas einem ersten Elektrolyse-Stack zugeführt wird und Wasserdampf und ein optionales Spülgas einem zweiten Elektrolyse-Stack zugeführt wird und beide Gasströme nach der Elektrolyse zu einem Synthesegas zusammengeführt werden.

Insbesondere ist eine Kombination wenigstens zweier der zuvor ausgeführten und in den anliegenden Ansprüchen aufgeführten Merkmalskombinationen besonders interessant. Beispielsweise können für Wartungsarbeiten bestimmte effizient arbeitende Reaktoren oder vollkeramische Elektrolysezelle durch kostengünstige Koks gefüllte Behälter zumindest temporär ersetzt werden, um eine längere Gesamtstandzeit zu ermöglichen, wobei diesbezüglich auch auf die Investitionskosten Rücksicht genommen werden kann.

Die erfindungsgemäße Synthesegaserzeugungsanordnung zur Erzeugung von Synthesegas aus CO2 und H2O durch das Synthesegaserzeugungsverfahren weist wenigstens einen Elektrolyse-Stack und hinter dem Elektrolyse-Stack angeordneten wenigstens einen die reverse Wasser-Gas-Shift-Reaktion R3 und die Steam-Reforming-Reaktion R4 begünstigenden katalytischen Reaktor und/oder wenigstens einen die Reaktionen R5, R6, R7 begünstigenden mit Koks gefüllten Behälter auf, wobei vor oder in dem katalytischen Reaktor und/oder mit Koks gefüllten Behälter ein elektrischer Heizer vorgesehen ist.

Weitere mögliche oder auch bevorzugte Ausgestaltungen und Variationen ergeben sich nachfolgend:
Die erfindungsgemäße Synthesegaserzeugungsanordnung kann weiter aufweisen:
- einen vollkeramischen Stack, wobei der vollkeramische Stack kleiner dimensioniert ist als der erste Elektrolyse Stack
   und/oder
- eine Gastrennvorrichtung, die für hohe Temperaturen geeignet ist, zur Abtrennung von H₂O und CO₂ aus dem Gas nach der ersten Elektrolyse und einem zweiten Elektrolysestack zur weiteren Umsetzung des abgetrennten H₂O-CO₂-Gemisches
   und/oder
- ein einem zweiten Elektrolyse-Stack, wobei eine getrennte CO₂ und H₂O-Elektrolyse durchgeführt wird, wobei CO₂ und ein optionales Spülgas dem ersten Elektrolyse-Stack zugeführt wird und Wasserdampf und ein optionales Spülgas dem zweiten Elektrolyse-Stack zugeführt wird und beide Produktgasströme, falls vorgesehen nach der Gasabkühlung, zu einem Synthesegas zusammengeführt werden.

Vor dem oder den Elektrolyse-Stacks und/oder vor dem oder den katalytischen Reaktor und/oder mit Koks gefüllten Behälter ist wenigstens eine Temperaturerhöhungsanordnung oder Rekuperator und/oder ein elektrischen Heizer vorgesehen.

An dieser Stelle soll darauf hingewiesen werden, dass die Elektroenergie, die zum Heizen und zum Betrieb der Elektrolyse und dgl. im Zuge dieser Offenbarung und Erfindung verwendet werden, insbesondere oder auch ausschließlich aus regenerativ erzeugter und besonders bevorzugt überschüssiger Elektronenergie besteht. Diesbezüglich wird auf die weiteren Anmeldungen und Patente der Anmelderin SunFire GmbH verwiesen.

Insgesamt lassen sich die Vorteile der diesseitig offenbarten Erfindung wie folgt zusammenfassen:
- Bessere Synthesegaszusammensetzung, weniger nichtreagierende Gaskomponenten wie CO₂ und CH₄;
- Bessere Kohlenstoffausnutzung, mehr Kohlenstoff wird zu CO und weniger zu CO₂ und CH₄ umgesetzt;
- Bessere Wasserstoffausnutzung, weniger Wasserstoff wird an Methan gebunden;
- Wegfall aufwendiger Gasreinigungsprozesse;
- Höhere Effizienz der Gaserzeugung, es wird wenig "Ballastgas" aufgeheizt, verdichtet, gereinigt;
- Höhere Produktausbeute in der Synthese.

Insbesondere wurden seitens der Erfinder die folgenden Überlegungen getätigt, die zu entsprechenden Erkenntnissen geführt und die wiederum letztendlich zu der Erfindung geführt haben:
- Bilanzrechnungen haben gezeigt, dass bei 850 °C Gasaustrittstemperatur aus der Co-Elektrolyse das Gas hohe Gehalte an CO₂ und CH₄ aufweist;
- Verstärkt wird der CH₄-Anteil bei hohen Drücken in der Co-Elektrolyse;
- Eigenes Wissen und die Erfahrungen aus der Entwicklung des RWGS-Prozesses haben gezeigt, dass niedrigere CO₂- und CH₄-Gehalte bei höheren Temperaturen möglich sind;
- Um niedrigere CO₂- und CH₄-Gehalte bei der Co-Elektrolyse zu erhalten, mussten neue Wege beschritten werden, wodurch es notwendig wurde beide Technologien zusammenzubringen;
- Überlegungen zu Verbesserung der Gasqualität bei der Co-Elektrolyse.

Weitere Vorteile, Merkmale und Anwendungsmöglichkeiten der vorliegenden Erfindung ergeben sich aus der nachfolgenden Beschreibung in Zusammenhang mit den Figuren. Anhand der

Figuren soll die Erfindung näher und auch exemplarisch sowie bevorzugt erläutert werden.

Es zeigen:
- Fig. 1: eine schematische Darstellung eines Ausführungsbeispiels zur Temperaturerhöhung und Nachschaltung von Katalysatorbetten zur Durchführung der RWGS-Reaktion nach dem Elektrolysestack;
- Fig. 2: eine schematische Darstellung eines Ausführungsbeispiels zur Temperaturerhöhung und Nachschaltung eines kleinen vollkeramischen Stacks;
- Fig. 3: eine schematische Darstellung eines Ausführungsbeispiels mit H₂-Überschuss;
- Fig. 4: eine schematische Darstellung eines Ausführungsbeispiels für eine H₂/CO-Abtrennung bei hohen Temperaturen und Nachschaltung eines zweiten Stacks und
- Fig. 5: eine schematische Darstellung für eine getrennte elektrolytische Zerlegung von H₂O und CO₂.

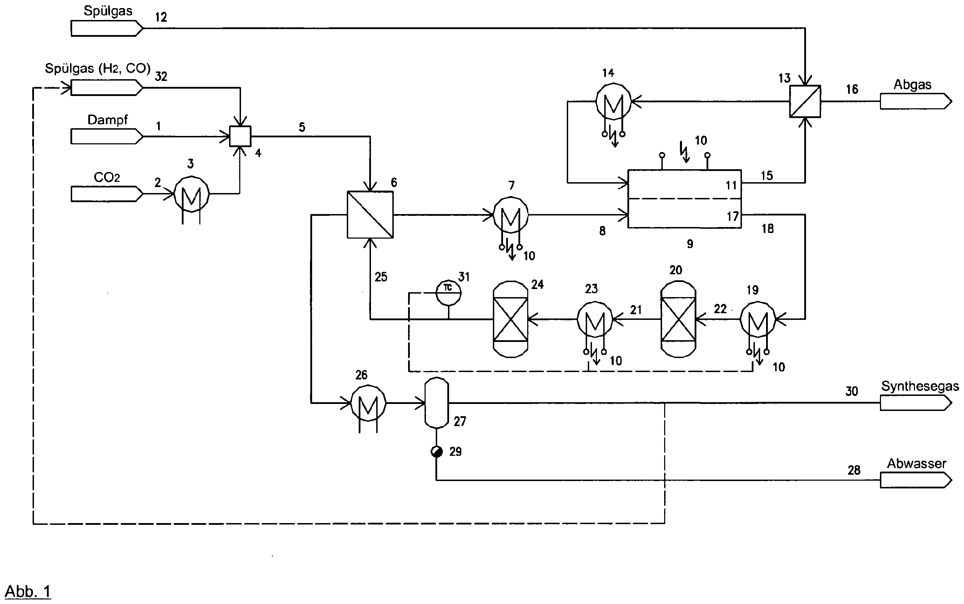

**Fig. 1** zeigt eine schematische Darstellung zur Temperaturerhöhung und Nachschaltung von Katalysatorbetten zur Durchführung der RWGS-Reaktion nach dem Elektrolysestack.

Wasserdampf 1, H₂/CO-haltiges Kathodenspülgas 32 und CO₂ 2, das in einem Wärmeübertrager 3 zur Vermeidung von Wasserdampfkondensation vorgewärmt wird, werden in einem Gasmischer 4 gemischt. Die Vorwärmung des CO₂ kann mit einem elektrisch betriebenen Heizer, mit Abwärme der Co-Elektrolyse oder aus einer anderen externen Wärmequelle erfolgen. Wasserdampf 1, Kathodenspülgas 32 und CO₂ 2 stehen unter erhöhtem Druck, damit das erzeugte Synthesegas 30 bei einem gewünschten Druck abgegeben werden kann. Das Kathodenspülgas 32 kann ein mittels Gebläse (nicht dargestellt) rezirkulierter Teilstrom des erzeugten Synthesegases 30 sein.

Das Wasserdampf-CO₂-Spülgas-Gemisch 5 wird im Rekuperator 6 gegen das heiße, abzukühlende Reaktionsgas 25 so weit wie möglich aufgeheizt und kann anschließend, falls notwendig, im elektrisch betriebenen Heizer 7 weiter aufgeheizt werden.

Im Elektrolyse-Stack 9 erfolgt durch Elektroenergie 10 eine elektrolytische Aufspaltung von Wasserdampf und CO₂ des zugeführten Gases 8 zu H₂, CO und O₂. Der an der Anode 11 anfallende Sauerstoff wird mit Spülgas 12, das mit dem erforderlichen Druck zugeführt und im Rekuperator 13 sowie im elektrisch betriebenen Heizer 14 vorgewärmt wird, aus dem Stack 9 abgeführt. Das heiße Spülgas-O₂-Gemisch 15 wird im Rekuperator 13 gegen das vorzuwärmende Spülgas 12 abgekühlt und anschließend als Abgas 16 an die Atmosphäre abgegeben.

Das an der Kathode 17 anfallende ca. 850 °C heiße Gas 18 enthält H₂, CO, nicht umgesetzten Wasserdampf und CO₂ sowie gebildetes Methan und befindet sich aufgrund der hohen Temperatur und des nickelhaltigen Werkstoffes weitgehend im chemischen Gleichgewicht.

Um den CO₂- und CH₄-Gehalt im Gas 18 zu verringern, wird das Gas 18 dem mit Elektroenergie 10 betriebenen Heizer 19 zur weiteren Vorheizung und anschließend dem katalytischen Reaktor 20 zugeführt, indem das aufgeheizte Gas wieder, hauptsächlich über die Reaktionen R3 und R4 bis zum chemischen Gleichgewicht reagiert. Da die Reaktionsendtemperatur des Gases 21 nach dem katalytischen Reaktor 20 höher sein wird als im Gas 18 nach dem Elektrolysestack 9, ist der CO₂- und CH₄-Gehalt im Gas 21 niedriger als im Gas 18.

Da die maximale Vorwärmtemperatur des Gases 22 werkstoffbedingt begrenzt ist, können eine oder mehrere Heizer-Reaktor-Kombinationen 23-24 notwendig sein, bis im Gas 25 die erforderliche Reaktionsendtemperatur 31 und damit die angestrebte CO₂- und CH₄-Konzentration erreicht sind.

Nach der Abkühlung des Reaktionsgases 25 im Rekuperator 6 gegen das aufzuheizende Wasserdampf-CO₂-Spülgas-Gemisch 5 und im mit Kühlwasser betriebenen Schlusskühler 26 wird im Kondensattrennbehälter 27 der im Elektrolysestack 9 nicht umgesetzte bzw. sich durch die chemische Reaktion R3 gebildete und in der Kühlung 6 und 26 auskondensierte Wasserdampf 28 abgetrennt und über den Kondensatabscheider 29 ausgeschleust.

Das nach dem Trennbehälter 27 verbleibende Synthesegas 30 mit dem gewünschten H₂:CO-Molverhältnis und den niedrigen CO₂- und CH₄-Gehalten wird der sich anschließenden Synthese zugeführt.

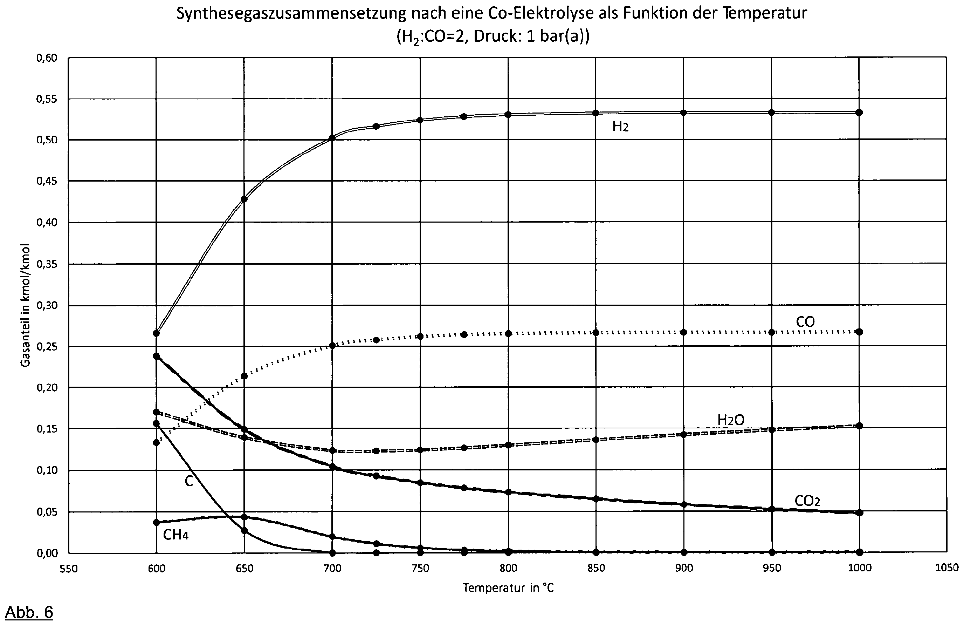

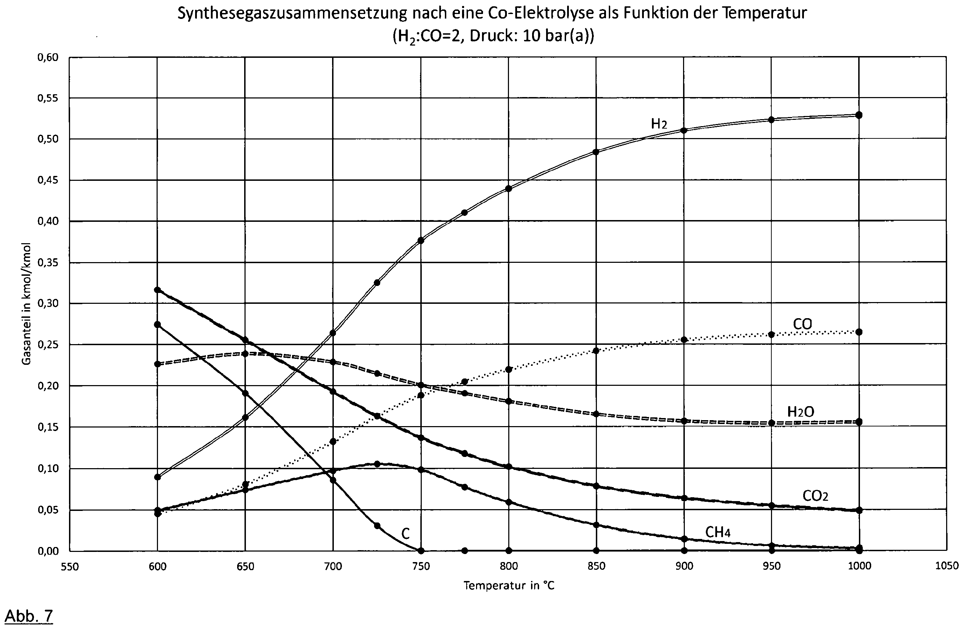

Die Abbildungen 6 und 7 im Anhang zeigen die Gaszusammensetzung nach dem Stack der Co-Elektrolyse als Funktion der Temperatur bei einem Druck von 1 bar (**Abbildung 6**) und 10 bar (**Abbildung 7**), einem H₂:CO-Molverhältnis von 2 sowie einem H₂O/CO₂-Zersetzungsgrad von 80 %.

Die folgenden Tabellen zeigen die Gaszusammensetzungen für ausgewählte Temperaturwerte bei 1 bar (Tabelle 1) und 10 bar (Tabelle 2) und einem H₂O/CO₂-Zersetzungsgrad von 80 %:

**Tabelle 1: Gaszusammensetzungen I für ausgewählte Temperaturwerte bei 1 bar**

| p [bar(a)] | 1 | | | 1 | | |
|---|---|---|---|---|---|---|
| t [°C] | 850 | 950 | 1000 | 850 | 950 | 1000 |
| | kmol/kmol | | | kmol/kmol, wasserfrei | | |
| CO | 0,2662 | 0,2666 | 0,2670 | 0,3082 | 0,3128 | 0,3150 |
| CO₂ | 0,0647 | 0,0524 | 0,0477 | 0,0749 | 0,0615 | 0,0563 |
| H₂ | 0,5325 | 0,5332 | 0,5329 | 0,6163 | 0,6256 | 0,6287 |
| H₂O | 0,1360 | 0,1477 | 0,1523 | 0,0000 | 0,0000 | 0,0000 |
| CH₄ | 0,0005 | 0,0001 | 0,0000 | 0,0006 | 0,0001 | 0,0000 |
| Summe | 1,0000 | 1,0000 | 1,0000 | 1,0000 | 1,0000 | 1,0000 |
| H₂:CO | | | | 2,00 | 2,00 | 2,00 |
| Summe CO₂+CH₄ | | | | 0,0755 | 0,0616 | 0,0563 |

**Tabelle 2: Gaszusammensetzungen I für ausgewählte Temperaturwerte bei 10 bar**

| p [bar(a)] | 10 | | | 10 | | |
|---|---|---|---|---|---|---|
| t [°C] | 850 | 950 | 1000 | 850 | 950 | 1000 |
| | kmol/kmol | | | kmol/kmol, wasserfrei | | |
| CO | 0,2420 | 0,2617 | 0,2647 | 0,2897 | 0,3093 | 0,3134 |
| CO₂ | 0,0784 | 0,0546 | 0,0486 | 0,0938 | 0,0646 | 0,0575 |
| H₂ | 0,4840 | 0,5233 | 0,5288 | 0,5795 | 0,6187 | 0,6259 |
| H₂O | 0,1648 | 0,1541 | 0,1552 | 0,0000 | 0,0000 | 0,0000 |
| CH₄ | 0,0308 | 0,0062 | 0,0027 | 0,0369 | 0,0074 | 0,0032 |
| Summe | 1,0000 | 1,0000 | 1,0000 | 1,0000 | 1,0000 | 1,0000 |
| H₂:CO | | | | 2,00 | 2,00 | 2,00 |
| Summe CO₂+CH₄ | | | | 0,1307 | 0,0720 | 0,0607 |

Der CO₂- und CH₄-Gehalt im erzeugten Gas ist umso niedriger, je höher die Temperatur ist. Die Gaszusammensetzungen bei 850 °C entsprechen der Gaszusammensetzung beim Stand der Technik.

Im Folgenden wird eine weitere Lösung, nämlich durch Temperaturerhöhung und Nachschaltung von Koksbetten nach dem Elektrolysestack, erläutert, wobei weiterhin auf Fig. 1 Bezug genommen wird.

Im Unterschied zur vorangegangenen Lösung sind die Reaktoren 20 und 24 in Fig. 1 nicht mit Katalysator sondern mit Koks gefüllt, der durch die chemischen Reaktionen (R5, R6 und R7) verbraucht wird und deshalb regelmäßig ersetzt werden muss. Der Koks kann z.B. aus Biomasse hergestellte Holzkohle sein.

Über die Heizer 19 und 23 wird dem Gasstrom 18 so viel Wärme zugeführt, dass sich das Gas 18 mit dem Koks in den Behältern 20 und 24 umsetzt und sich die in den folgenden Tabellen in Abhängigkeit vom Druck zusammengestellten Gasqualitäten und Reaktionsendtemperaturen (Tabelle 3 und Tabelle 4), jeweils bei einem H₂O/CO₂-Zersetzungsgrad in der Elektrolyse von 80 %, ergeben:

**Tabelle 3: Gaszusammensetzungen II für ausgewählte Temperaturwerte bei 1 bar**

| p [bar(a)] | 1 | | | 1 | | |
|---|---|---|---|---|---|---|
| t [°C] | 850 | 950 | 1000 | 850 | 950 | 1000 |
| | kmol/kmol | | | kmol/kmol, wasserfrei | | |
| CO | 0,3229 | 0,3296 | 0,3314 | 0,3272 | 0,3310 | 0,3322 |
| CO₂ | 0,0063 | 0,0015 | 0,0008 | 0,0064 | 0,0015 | 0,0008 |
| H₂ | 0,6455 | 0,6590 | 0,6613 | 0,6541 | 0,6618 | 0,6629 |
| H₂O | 0,0133 | 0,0042 | 0,0025 | 0,0000 | 0,0000 | 0,0000 |
| CH₄ | 0,0121 | 0,0057 | 0,0040 | 0,0122 | 0,0057 | 0,0041 |
| Summe | 1,0000 | 1,0000 | 1,0000 | 1,0000 | 1,0000 | 1,0000 |
| H₂:CO | | | | 2,00 | 2,00 | 2,00 |
| Summe CO₂+CH₄ | | | | 0,0186 | 0,0072 | 0,0049 |

**Tabelle 4: Gaszusammensetzungen II für ausgewählte Temperaturwerte bei 10 bar**

| p [bar(a)] | 10 | | | 10 | | |
|---|---|---|---|---|---|---|
| t [°C] | 850 | 950 | 1000 | 850 | 950 | 1000 |
| | kmol/kmol | | | kmol/kmol, wasserfrei | | |
| CO | 0,2633 | 0,3015 | 0,3115 | 0,2889 | 0,3126 | 0,3187 |
| CO₂ | 0,0421 | 0,0126 | 0,0070 | 0,0462 | 0,0130 | 0,0072 |
| H₂ | 0,5259 | 0,6027 | 0,6230 | 0,5769 | 0,6249 | 0,6374 |
| H₂O | 0,0884 | 0,0354 | 0,0224 | 0,0000 | 0,0000 | 0,0000 |
| CH₄ | 0,0802 | 0,0477 | 0,0360 | 0,0880 | 0,0495 | 0,0368 |
| Summe | 1,0000 | 1,0000 | 1,0000 | 1,0000 | 1,0000 | 1,0000 |
| H₂:CO | | | | 2,00 | 2,00 | 2,00 |
| Summe CO₂+CH₄ | | | | 0,1342 | 0,0625 | 0,0440 |

An dieser Stelle wird angemerkt, dass die Temperatur von 850 °C hier nicht dem Stand der Technik entspricht, sondern dem Gas 18 wurde Wärme zugeführt, um die Reaktionsendtemperatur nach dem Koksbett von 850 °C zu erreichen.

Es ist nicht möglich, unter Beibehaltung eines konstanten H₂:CO-Molverhältnisses im Synthesegas 30 (hier =2) das Gas 18 nach dem Stack 9 direkt, d.h. ohne weitere Aufheizung über ein Koksbett zu leiten. Die endothermen chemischen Reaktionen des Gases 18 mit dem Kokskohlenstoff (R5 und R6) kühlen das Gas ab. Da der CO₂- und der CH₄-Gehalt mit fallender Temperatur größer wird, verschlechtert sich das Gas gegenüber der Variante ohne Koksbett (=Stand der Technik).

Die Werte in den Tabellen zeigen, dass mit dem Einsatz eines Koksbettes nach dem Elektrolyse-Stack eine Verbesserung der Gasqualität erreichbar ist. Bei höheren Drücken (10 bar) müssen aber gleichzeitig auch höhere Temperaturen zum Einsatz kommen, da der höhere Methangehalt die Gasqualität wieder verschlechtert.

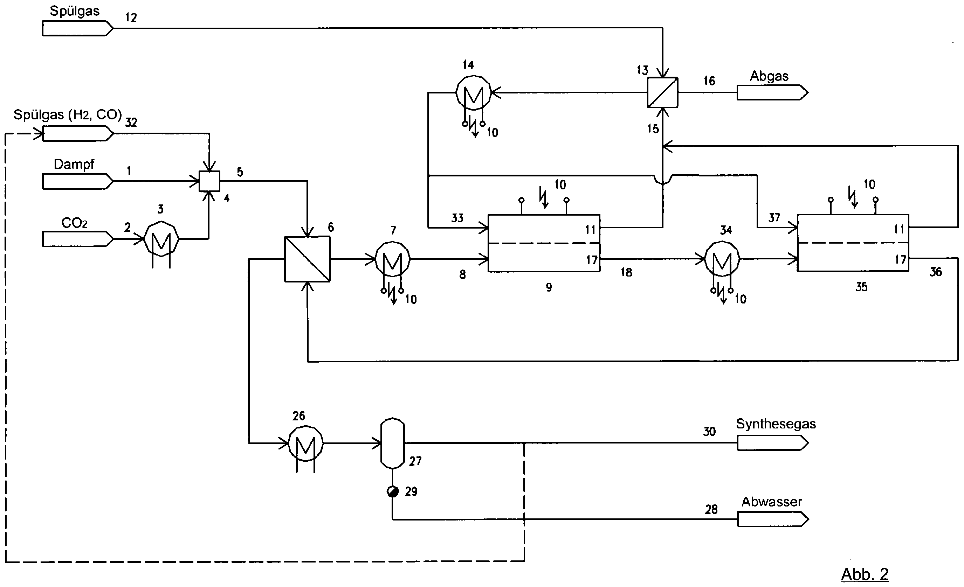

Fig 2 zeigt eine schematische Darstellung eines Ausführungsbeispiels zur Temperaturerhöhung und Nachschaltung eines kleinen vollkeramischen Stacks.

Wasserdampf 1, Kathodenspülgas 32 und CO₂ 2, das in einem Wärmeüberträger 3 zur Vermeidung von Wasserdampfkondensation vorgewärmt wird, werden in einem Mischer 4 gemischt. Die Vorwärmung des CO₂ kann mit einem elektrisch betriebenen Heizer, mit Abwärme der Co-Elektrolyse oder aus einer anderen externen Wärmequelle erfolgen. Wasserdampf 1, Kathodenspülgas 32 und CO₂ 2 stehen unter erhöhtem Druck, damit das erzeugte Synthesegas 30 bei einem gewünschten Druck abgegeben werden kann. Das Kathodenspülgas 32 kann ein mittels Gebläse (nicht dargestellt) rezirkulierter Teilstrom des erzeugten Synthesegases 30 sein.

Das Wasserdampf-CO₂-Spülgas-Gemisch 5 wird im Rekuperator 6 gegen das heiße, abzukühlende Reaktionsgas 36 so weit wie möglich aufgeheizt und kann anschließend, falls notwendig, im elektrisch betriebenen Heizer 7 weiter aufgeheizt werden.

Im Elektrolyse-Stack 9, der bei üblichen Temperaturen von ca. 850 °C betrieben wird, erfolgt durch Elektroenergie 10 eine elektrolytische Aufspaltung von Wasserdampf und CO₂ des zugeführten Gases 8 zu H₂, CO und O₂, wobei der H₂O/CO₂-Umsetzungsgrad noch nicht seinen maximal zulässigen Wert erreicht hat. Der an der Anode 11 anfallende Sauerstoff wird mit einem Teilstrom 33 des Spülgases 12, das mit dem erforderlichen Druck zugeführt und im Rekuperator 13 sowie im elektrisch betriebenen Heizer 14 vorgewärmt wird, aus dem Stack 9 abgeführt.

Das an der Kathode 17 anfallende ca. 850 °C heiße Gas 18 enthält H₂, CO, nicht umgesetzten Wasserdampf und CO₂ sowie gebildetes Methan und befindet sich aufgrund der hohen Temperatur und des nickelhaltigen Werkstoffes weitgehend im chemischen Gleichgewicht.

Für eine weitere elektrolytische CO₂/H₂O-Zersetzung wird das Gasgemisch 18 im optional vorhandenen mit Elektronenergie 10 betriebenen Heizer 34 weiter aufgeheizt und dem vollkeramischen ebenfalls mit Elektroenergie 10 betriebenen Stack 35 zugeführt, indem die weitere elektrolytische Zerlegung von CO₂ und H₂O bis zum zulässigen H₂O/CO₂-Zersetzungsgrad bei höheren Temperaturen, z.B. bei 1.000 °C, erfolgt.

Aufgrund der höheren Temperaturen im Stack 35 liegt das chemische Gleichgewicht des erzeugten Gasgemisches 36 bei geringeren CO₂- und CH₄-Gehalten als bei der Co-Elektrolyse des Standes der Technik.

Der auf der Anodenseite 11 des Stacks 35 anfallende Sauerstoff wird mit dem zweiten Teilstrom 37 des Spülgases 12 abgeführt und nach Mischung mit dem heißen Spülgas-O₂-Gemisch aus dem Stack 9 als Gas 15 im Rekuperator 13 gegen das vorzuwärmende Spülgas 12 abgekühlt und anschließend als Abgas 16 an die Atmosphäre abgegeben.

Nach der Abkühlung des Reaktionsgases 36 im Rekuperator 6 gegen das aufzuheizende Wasserdampf-CO₂-Spülgas-Gemisch 5 und im mit Kühlwasser betriebenen Schlusskühler 26 wird im Kondensattrennbehälter 27 der im Elektrolysestack 35 nicht umgesetzte und in der Kühlung 6 und 26 auskondensierte Wasserdampf 28 abgetrennt und über den Kondensatabscheider 29 ausgeschleust.

Das nach dem Trennbehälter 27 verbleibende Synthesegas 30 mit dem gewünschten H₂:CO-Molverhältnis und den niedrigen CO₂- und CH₄-Gehalten wird der sich anschließenden Synthese zugeführt.

Die sich bei 1.000 °C und jeweils bei 1 bar und bei 10 bar bei gleichem Gesamt-H₂O/CO₂-Zersetzungsgrad einstellenden Gaszusammensetzungen entsprechen den Zusammensetzungen der Variante mit nachgeschalteten katalytischen Reaktoren und sind in den entsprechenden Tabellen der Beschreibung zu Fig. 1 angeben.

In Fig. 3 ist eine schematische Darstellung eines Ausführungsbeispiels mit H₂-Überschuss dargestellt.

Im Gegensatz zur Variante Fig. 1 wird aus dem Gas 38 nach der Schlusskühlung 26 und Kondensatabtrennung 27 in der Vorrichtung 39 Wasserstoff bzw. ein mit Wasserstoff angereichertes Gas 40 abgetrennt, mittels des Verdichters 41 rezirkuliert und zusammen mit dem Dampf 1 und dem CO₂ 2 dem Prozess wieder zugeführt.

Die Vorrichtung 39 zur Wasserstoffabtrennung kann z.B. eine Membrantrennanlage oder einer Druckwechselabsorptionsanlage (PSA) sein.

Zur genauen Regelung der abzutrennenden H₂-Menge kann z.B. ein Teil des Gasstromes 38 als Bypass um die Abtrennvorrichtung 39 geführt werden (nicht dargestellt).

Das nach der Gastrennanlage 39 verbleibende Gas 30 ist das Synthesegas mit dem gewünschten H₂:CO-Molverhältnis für die nachfolgende Synthese.

Der dem Prozess wieder zugeführte Wasserstoff 42 übernimmt gleichzeitig die Funktion des Kathodenspülgases 32.

Durch die H₂-Rezirkulation wird der SOC-Stack mit H₂-Überschuss betrieben, und es kommt zu einer Verschiebung des chemischen Gleichgewichts der Reaktionen R3 und R4 hin zu weniger CO₂ und mehr CH₄, wie folgende Tabelle zeigt (H₂O/CO₂-Zersetzungsgrad 80 %):

**Tabelle 5: Gaszusammensetzungen III für ausgewählte Temperaturwerte bei 1 und 10 bar**

| Druck | 1 bar | | | | 10 bar | | | |
|---|---|---|---|---|---|---|---|---|
| Temperatur | 850 °C | | 950 °C | | 850 °C | | 950 °C | |
| H2-Kreislauf | ohne | mit | ohne | mit | ohne | mit | ohne | mit |
| | kmol/kmol wasserfrei | | | | | | | |
| CO | 0,3082 | 0,3205 | 0,3128 | 0,3241 | 0,2897 | 0,2914 | 0,3093 | 0,3165 |
| CO₂ | 0,0749 | 0,0366 | 0,0615 | 0,0276 | 0,0938 | 0,0574 | 0,0646 | 0,0325 |
| H₂ | 0,6163 | 0,6412 | 0,6256 | 0,6481 | 0,5795 | 0,5812 | 0,6187 | 0,6325 |
| H₂O | 0,0000 | 0,0000 | 0,0000 | 0,0000 | 0,0000 | 0,0000 | 0,0000 | 0,0000 |
| CH₄ | 0,0006 | 0,0017 | 0,0001 | 0,0002 | 0,0369 | 0,0701 | 0,0074 | 0,0185 |
| Summe | 1,0000 | 1,0000 | 1,0000 | 1,0000 | 1,0000 | 1,0000 | 1,0000 | 1,0000 |
| H₂:CO | 2,00 | 2,00 | 2,00 | 2,00 | 2,00 | 1,99 | 2,00 | 2,00 |
| Summe CO₂+CH₄ | 0,0755 | 0,0383 | 0,0616 | 0,0278 | 0,1307 | 0,1275 | 0,0720 | 0,0510 |

Die Variante bei 850 °C entspricht einer Co-Elektrolyse mit H₂-Überschuss aber ohne die Nachheizung des Gases 18 aus dem Stack in den Heizern 19 und 23 und der Nachreaktion in den Reaktoren 20 und 24 bei höheren Temperaturen.

Es sind jeweils die Gasqualitäten mit H₂-Rezirkulation ("mit") den Qualitäten ohne Rezirkulation ("ohne") gegenübergestellt. Die Gasqualitäten ohne Rezirkulation entsprechen den Qualitäten mit nachgeschalteten katalytischen Reaktor.

Mit H₂-Überschuss ist eine Verbesserung der Gasqualität gegenüber dem Stand der Technik zu erreichen. Bei höheren Drücken (10 bar) ist für eine deutliche Verbesserung der Gasqualität auch eine höhere Reaktionsendtemperatur von Vorteil.

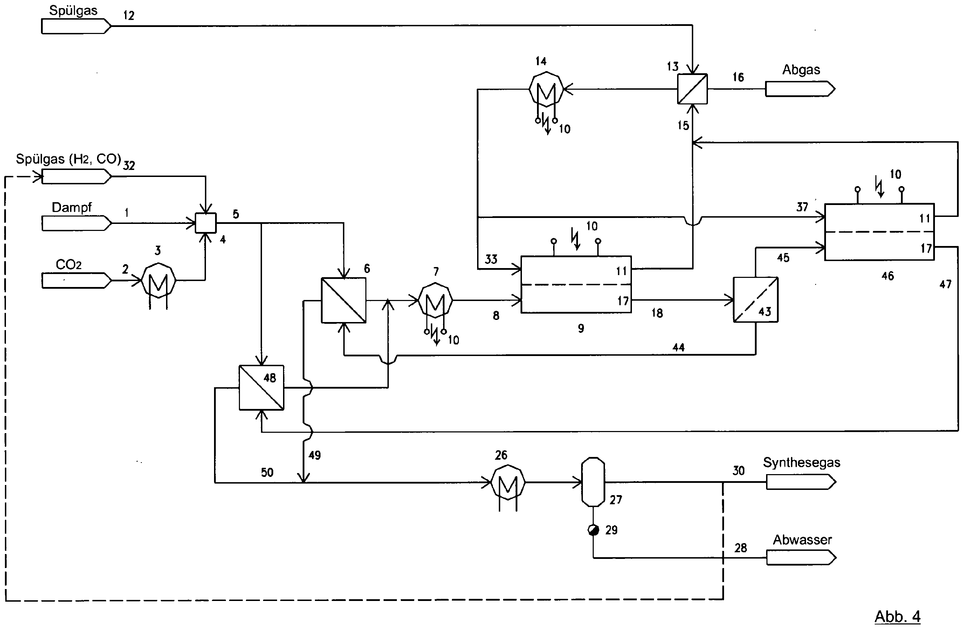

**Fig. 4** zeigt eine schematische Darstellung eines Ausführungsbeispiels für eine H₂/CO-Abtrennung bei hohen Temperaturen und Nachschaltung eines zweiten Stacks.

Ausgehend von der Beschreibung von Fig. 1 wird das im ersten Stack 9 mit einem H₂O- und CO₂-Zersetzungsgrad von z.B. 80 % erzeugte Gas 18 zunächst einer Gastrennvorrichtung 43, die für hohe Temperaturen geeignet ist, zugeführt. Diese Gastrennvorrichtung 43 kann z.B. eine keramische Membran sein.

Mit Hilfe dieser Gastrennvorrichtung wird aus dem Gas 18 ein hoher Anteil CO und H₂ und möglichst kein H₂O und CO₂ als Gas 44 abgetrennt und anschließend im Rekuperator 6 gegen einen Teilstrom des Gasgemisches 5 abgekühlt.

Die verbleibende H₂O- und CO₂-Menge 45 wird als Feedgas einem zweiten Stack 46 zugeführt, in dem das Gas 45 mit Hilfe von Elektroenergie 10 weiter elektrolytisch zerlegt wird. Da der H₂- und CO-Anteil im Gas 45 anfänglich gering ist, kann im Stack 46 bezogen auf die zugeführte Menge H₂O und CO₂ im Gas 45 nochmals ein hoher Zersetzungsgrad, z.B. 70 %, erreicht werden, so dass der Gesamt-H₂O/CO₂-Zersetzungsgrad bezogen auf die Menge Wasserdampf 1 und CO₂ 2 in beiden Stacks viel höher als in nur einem Stack (z.B. 80 %) ist, ohne dass die Gefahr besteht, dass der oxydische Elektrolyt des Stacks reduziert wird.

Das den Stack 46 verlassende CO- und H₂-reiche Gas 47 wird im Rekuperator 48 gegen den zweiten Teilstrom des Gases 5 abgekühlt. Beide gekühlte Gasströme 49 und 50 werden gemischt und im Schlusskühler 26 weiter abgekühlt, wo auch das restliche, im Gasgemisch enthaltene Wasser 28 auskondensiert und im Kondensatabscheider 27 aus dem Gasstrom abgetrennt wird.

Das Synthesegas 30 mit dem gewünschten H₂:CO-Molverhältnis wird der nachfolgenden Synthese zugeführt.

Soll zusätzlich eine höhere Reaktionstemperatur erreicht werden, können z.B. Heizer und katalytische Reaktoren entsprechend der Beschreibung in Fig. 1 dem Stack 46 nachgeschalten werden.

Die sich bei Temperaturen von 850 °C und 950 °C und bei einem Druck von 1 bar und 10 bar sowie bei einem H₂O/CO₂-Zersetzungsgrad von 80 % im ersten und 70 % im zweiten Stack ergebenden Gasqualitäten sind in folgender Tabelle zusammengefasst:

**Tabelle 6: Gaszusammensetzungen IV für ausgewählte Temperaturwerte bei 1 und 10 bar**

| Druck | 1 bar | | | | 10 bar | | | |
|---|---|---|---|---|---|---|---|---|
| Temperatur | 850 °C | | 950 °C | | 850 °C | | 950 °C | |
| H₂+CO-Abtrennung + 2. Co-SOC | ohne | mit | ohne | mit | ohne | mit | ohne | mit |
| | kmol/kmol wasserfrei | | | | | | | |
| CO | 0,3082 | 0,3258 | 0,3128 | 0,3275 | 0,2897 | 0,3146 | 0,3093 | 0,3257 |
| CO₂ | 0,0749 | 0,0224 | 0,0615 | 0,0176 | 0,0938 | 0,0261 | 0,0646 | 0,0177 |
| H₂ | 0,6163 | 0,6515 | 0,6256 | 0,6549 | 0,5795 | 0,6308 | 0,6187 | 0,6522 |
| H₂O | 0,0000 | 0,0000 | 0,0000 | 0,0000 | 0,0000 | 0,0000 | 0,0000 | 0,0000 |
| CH₄ | 0,0006 | 0,0003 | 0,0001 | 0,0000 | 0,0369 | 0,0285 | 0,0074 | 0,0043 |
| Summe | 1,0000 | 1,0000 | 1,0000 | 1,0000 | 1,0000 | 0,9999 | 1,0000 | 1,0000 |
| H₂:CO | 2,00 | 2,00 | 2,00 | 2,00 | 2,00 | 2,01 | 2,00 | 2,00 |
| Summe CO₂+CH₄ | 0,0755 | 0,0227 | 0,0616 | 0,0176 | 0,1307 | 0,0546 | 0,0720 | 0,0220 |

Es sind jeweils die Gasqualitäten mit 2. Co-Elektrolyse ("mit") den Qualitäten ohne 2. Co-Elektrolyse ("ohne") gegenübergestellt. Die Gasqualitäten ohne 2. Co-Elektrolyse entsprechen den Qualitäten mit nachgeschalteten katalytischen Reaktor.

Mit einer 2. Co-Elektrolyse und damit höherem H₂O/CO₂-Zersetzungsgrad ist eine Verbesserung der Gasqualität gegenüber dem Stand der Technik zu erreichen.

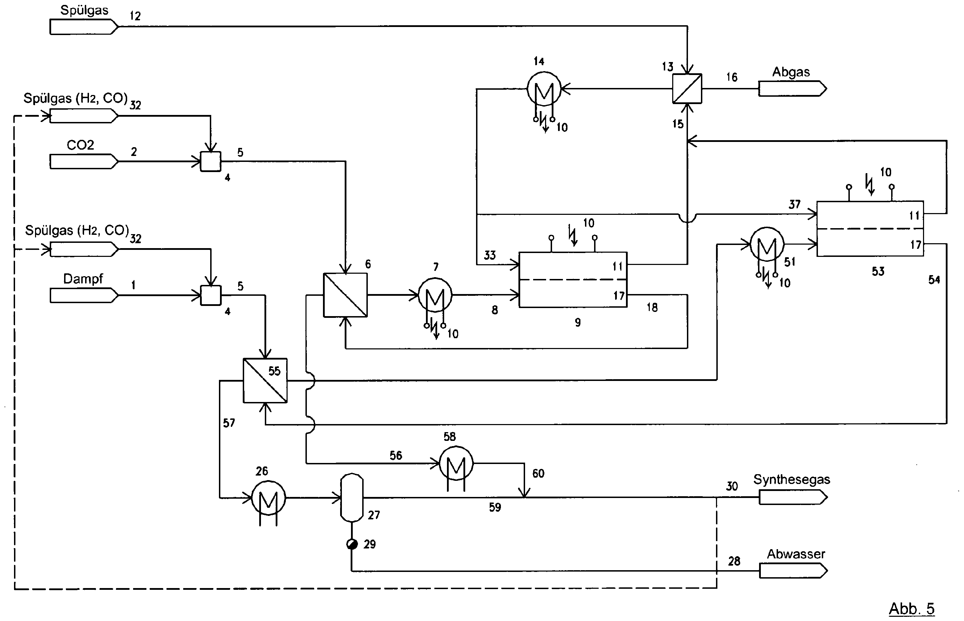

In **Fig. 5** ist eine schematische Darstellung für eine getrennte elektrolytische Zerlegung von H₂O und CO₂ gezeigt, bei der eine getrennte CO₂- und H₂O-Elektrolyse angewandt wird.

Das CO₂ 2 wird nach rekuperativer Aufheizung im Wärmeübertrager 6 gegen das heiße COreiche Gas 18 und weiterer Erwärmung im Heizer 7 im Stack 9 mit Hilfe von Elektroenergie 10 katalytisch zerlegt.

Der Wasserdampf 1 wird nach rekuperativer Aufheizung im Wärmeüberträger 55 gegen das heiße H₂-reiche Gas 54 und Nachheizung im Heizer 51 im Stack 53 mit Hilfe von Elektroenergie 10 elektrolytisch zerlegt.

Nach der Schlusskühlung der beiden gekühlten Gasströme 56 und 57 in den Kühlern 26 und 58, sowie der Abtrennung des Kondensates 28 aus dem Gasstrom 59 im Kondensatabscheider 27 werden beide Ströme 59 und 60 zum Synthesegas 30 mit dem gewünschten H₂:CO-Molverhältnis vermischt und der nachfolgenden Synthese zugeführt.

Die folgende Tabelle (Tabelle 6) zeigt die Gaszusammensetzungen bei 850 °C und 950 °C und einem Druck von 1 bar und 10 bar jeweils bei einem H₂O/CO₂-Zersetzungsgrad von 80 %:

**Tabelle 6: Gaszusammensetzungen V für ausgewählte Temperaturwerte bei 1 und 10 bar**

| Druck | 1ber | | | | 10 bar | | | |
|---|---|---|---|---|---|---|---|---|
| Temperatur | 850 °C | | 950 °C | | 850 °C | | 950 °C | |
| getrennte CO₂-u. H₂O-SOC | ohne | mit | ohne | mit | ohne | mit | ohne | mit |
| | kmol/kmol wasserfrei | | | | | | | |
| CO | 0,3082 | 0,3077 | 0,3128 | 0,3077 | 0,2897 | 0,3077 | 0,3093 | 0,3077 |
| CO₂ | 0,0749 | 0,0770 | 0,0615 | 0,0770 | 0,0938 | 0,0770 | 0,0646 | 0,0770 |
| H₂ | 0,6163 | 0,6153 | 0,6256 | 0,6153 | 0,5795 | 0,6153 | 0,6187 | 0,6153 |
| H₂O | 0,0000 | 0,0000 | 0,0000 | 0,0000 | 0,0000 | 0,0000 | 0,0000 | 0,0000 |
| CH₄ | 0,0006 | 0,0000 | 0,0001 | 0,0000 | 0,0369 | 0,0000 | 0,0074 | 0,0000 |
| Summe | 1,0000 | 1,0000 | 1,0000 | 1,0000 | 1,0000 | 1,0000 | 1,0000 | 1,0000 |
| H₂:CO | 2,00 | 2,00 | 2,00 | 2,00 | 2,00 | 2,00 | 2,00 | 2,00 |
| Summe CO₂+CH₄ | 0,0755 | 0,0770 | 0,0616 | 0,0770 | 0,1307 | 0,0770 | 0,0720 | 0,0770 |

Die Gasqualität wird bei dieser Variante allein vom H₂O- bzw. CO₂-Zersetzungsgrad bestimmt. Eine Temperatur- und Druckabhängigkeit der Gaszusammensetzung ist nicht vorhanden, da keine homogene Gasreaktionen (R3 und R4) ablaufen können. Das führt dazu, dass im Vergleich zum Stand der Technik bei vergleichbaren H₂O- und CO₂-Zersetzungsgraden in der Elektrolyse lediglich bei hohen Drücken und Temperaturen <950 °C geringere CO₂+CH₄-Gehalte erzielt werden. Ursache ist die fehlende Methanbildung.

**Bezugszeichenliste**

| | | | |
|---|---|---|---|
| 1 | Wasserdampf | 31 | Reaktionsendtemperatur |
| 2 | Kohlenstoffdioxid | 32 | Kathodenspülgas |
| 3 | Wärmeübertrager | 33 | Teilstrom des Spülgases 12 |
| 4 | Gasmischer | 34 | elektrischer Heizer |
| 5 | Wasserdampf-CO₂-Spülgas-Gemisch | 35 | vollkeramischer Elektrolyse-Stack |
| 6 | Rekuperator | 36 | Gas nach vollkeramischen Stack |
| 7 | elektrischer Heizer | 37 | Teilstrom des Spülgases 12 |
| 8 | Feedgas Stack | 38 | Gas nach der Schlusskühlung |
| 9 | Elektrolyse-Stack | 39 | Vorrichtung zur Abtrennung von H₂ aus dem Gasgemisch 38 |
| 10 | Elektroenergie | | |
| 11 | Anode des Stacks | 40 | mit H₂ angereichertes Gas |
| 12 | Spülgas | 41 | Rezirkulationsverdichter |
| 13 | Rekuperator | 42 | zugeführter, rezirkulierter H₂-Strom |
| 14 | elektrischer Heizer | 43 | Gastrennvorrichtung, geeignet für hohe Temperaturen |
| 15 | Spülgas-O₂-Gemisch | | |
| 16 | Abgas | 44 | H₂- und CO-angereichertes Gas |
| 17 | Kathode des Stacks | 45 | H₂O- und CO₂-angereichertes Gas |
| 18 | Gas nach Stack | 46 | Elektrolyse-Stack |
| 19 | elektrischer Heizer | 47 | Gas nach Stack 46 |
| 20 | katalytischer Reaktor oder mit Koks gefüllter Behälter | 48 | Rekuperator |
| | | 49 | Teilstrom abgekühltes Reaktionsgas |
| 21 | Reaktionsgas nach katalytischen Reaktor oder mit Koks gefüllten Behälter | 50 | Teilstrom abgekühltes Reaktionsgas |
| | | 51 | elektrischer Heizer |
| 22 | vorgewärmtes Gas | 52 | Wasserdampf vor Stack 53 |
| 23 | elektrischer Heizer | 53 | Elektrolyse-Stack |
| 24 | katalytischer Reaktor oder mit Koks gefüllter Behälter | 54 | H₂-reiches Gas nach Stack 53 |
| | | 55 | Rekuperator |
| 25 | Reaktionsgas | 56 | gekühlter Teilstrom CO |
| 26 | Schlusskühler | 57 | gekühlter Teilstrom H₂ |
| 27 | Kondensattrennbehälter | 58 | Schlusskühler |
| 28 | Kondensat | 59 | H2-Strom nach Kondensatabscheidung |
| 29 | Kondensatabscheider | 60 | CO-Strom nach Schlusskühler |
| 30 | Synthesegas | | |

## Patentansprüche

1. Synthesegaserzeugungsverfahren aus CO₂ und H₂O mit einer Co-Elektrolyse (9),
wobei der CO₂- und/oder CH₄-Gehalt des erzeugten Gases (18) auf der Kathodenseite (17) verringert wird,
**dadurch gekennzeichnet, dass**
hierzu nach der Co-Elektrolyse (9) das Gas (18) der Kathodenseite, enthaltend H₂, CO, nicht umgesetzten Wasserdampf und CO₂ sowie CH₄, zusätzlich wenigstens einem die reverse Wasser-Gas-Shift-Reaktion R3 und die Steam-Reforming-Reaktion R4 begünstigenden katalytischen Reaktor (20, 24) und/oder wenigstens einem die Reaktionen R5 und R6 und R7 begünstigenden mit Koks gefüllten Behälter (20, 24) zugeführt wird, mit:
R3: CO₂ + H₂ → CO + H₂O
R4: CH₄ + H₂O → CO + 3 H₂
R5: CO₂ + C → 2 CO
R6: H₂O + C → CO + H₂
R7: 2 H₂ + C → CH₄
wobei beim Zuführen zu dem wenigstens einen katalytischen Reaktor (20, 24) und/oder wenigstens einem mit Koks gefüllten Behälter (20, 24) ein Vorheizen mittels wenigstens eines mit Elektroenergie betriebenen Heizers (19, 23) erfolgt.

2. Synthesegaserzeugungsverfahren nach Anspruch 1,
**dadurch gekennzeichnet, dass**
nach dem / den katalytischen Reaktoren und/oder dem / den mit Koks gefüllten Behältern (20, 24) eine nach einem Abkühlen (6, 26) des Gases (25) eine teilweise Gasabtrennung von H₂ oder H₂-reichem Gas aus dem Gasgemisch erfolgt, wobei das abgetrennte und mit H₂ angereicherte Gas (40) zu der Kathodenseite (17) des Elektrolyse-Stack (9) recycelt wird.

3. Synthesegaserzeugungsverfahren nach Anspruch 2,
**dadurch gekennzeichnet, dass**
als Abtrennvorrichtung (39) eine Membrantrennanlage und/oder eine Druckwechselabsorptionsanlage verwendet wird.

4. Synthesegaserzeugungsverfahren nach einem der vorangehenden Ansprüche,
**dadurch gekennzeichnet, dass**
das Vorheizen mittels eines Vorheizers (19, 23) erfolgt, der Bestandteil des katalytischen Reaktors (20,24) ist.

5. Synthesegaserzeugungsverfahren nach einem der vorangehenden Ansprüche,
**dadurch gekennzeichnet, dass**
nach dem Zuführen zu dem wenigstens einen die reverse Wasser-Gas-Shift-Reaktion R3 und/oder die Steam-Reforming-Reaktion R4 begünstigenden katalytischen Reaktor (20, 24) und/oder wenigstens dem einen mit Koks gefüllten Behälter (20, 24), in dem die Reaktionen R5 und/oder R6 und/oder R7 ablaufen, ein Zuführen zusätzlich über
- einen vollkeramischen Stack (35), der bei höheren Temperaturen als der Stack (9) betrieben wird, erfolgt, wobei der vollkeramische Stack (35) kleiner dimensioniert ist als der erste Elektrolyse-Stack (9)
oder
- einen zweiten Elektrolyse-Stack (46), der bei gleichem Temperaturniveau wie der erste Elektrolyse-Stack (9) betrieben wird, erfolgt.

6. Synthesegaserzeugungsverfahren nach Anspruch 5,
**dadurch gekennzeichnet, dass**
vor der Zuführung des Gases (18) zu dem vollkeramischen Stack (35), dem zweiten Elektrolyse-Stack (46) oder einer etwaig vorgesehenen Temperaturerhöhung und/oder einem elektrischen Heizer (34) das Gas (18) einer für höhere Temperaturen geeigneten Gastrennvorrichtung (43) zugeführt wird, wobei aus dem demvollkeramischen Stack (35), dem zweiten Elektrolyse-Stack (46) oder der etwaig vorgesehenen Temperaturerhöhung und/oder dem elektrischen Heizer (34) zuzuführenden Gas (18) ein Anteil an CO und H₂ von mehr als 0 % bis zu 100 % als Gas (44, 49) abgetrennt wird und als Synthesegas (30) zusammen mit dem aus dem vollkeramischen Stack (46) oder dem zweiten Elektrolyse-Stack (46) erzeugten Gas (47, 50) zur weiteren Verarbeitung zur Verfügung gestellt wird.

7. Synthesegaserzeugungsverfahren nach Anspruch 6,
**dadurch gekennzeichnet, dass**
als Gastrennvorrichtung (43) eine keramische Membran verwendet wird.

8. Synthesegaserzeugungsanordnung zur Erzeugung von Synthesegas aus CO₂ und H₂O durch das Synthesegaserzeugungsverfahren nach einem der vorangehenden Ansprüche,
**wobei die Anordnung aufweist:**
wenigstens einen Elektrolyse-Stack (9) und hinter dem Elektrolyse-Stack (9) angeordneten wenigstens einen die reverse Wasser-Gas-Shift-Reaktion R3 und die Steam-Reforming-Reaktion R4 begünstigenden katalytischen Reaktor (20, 24) und/oder wenigstens einen die Reaktionen R5 und R6 und R7 begünstigenden mit Koks gefüllten Behälter (20, 24),
wobei vor oder in dem katalytischen Reaktor (20, 24) und/oder mit Koks gefüllten Behälter (20, 24) ein elektrischer Heizer (19, 23) vorgesehen ist.

9. Synthesegaserzeugungsanordnung nach Anspruch 8,
**dadurch gekennzeichnet, dass** vor dem Elektrolyse-Stack (9) und/oder vor oder in dem katalytischen Reaktor (20, 24) und/oder mit Koks gefüllten Behälter (20, 24) ein Rekuperator oder eine weitere Temperaturerhöhungsanordnung zusätzlich zu dem elektrischen Heizer (19, 23) vorgesehen ist.

## Claims

1. A process for generating synthesis gas from CO₂ and H₂O by a co-electrolysis (9), wherein the CO₂ and CH₄ content of the generated gas (18) is reduced on the cathode side (17),
**characterised in that**
to this end, after the co-electrolysis (9), the gas (18) on the cathode side containing H₂, CO, unreacted steam and CO₂ as well as CH₄ is additionally fed to at least one catalytic reactor (20, 24) promoting the reverse water-gas shift reaction R3 and/or the steam reforming reaction R4 and/or to at least one coke-filled vessel (20, 24) promoting the reactions R5 and R6 and R7, with:
R3: CO₂ + H₂ → CO + H₂O
R4: CH₄ + H₂O → CO + 3 H₂
R5: CO₂ + C → 2 CO
R6: H₂O + C → CO + H₂
R7: 2 H₂ + C → CH₄
wherein during the feeding to the at least one catalytic reactor (20, 24) and/or at least one coke-filled vessel (20, 24) a pre-heating takes place using at least one heater (19, 23) operated by electrical energy.

2. The process for generating synthesis gas according to claim 1,
**characterised in that**
downstream of the catalytic reactor(s) and/or the coke-filled vessel(s) (20, 24), after a cooling (6, 26) of the gas (25), a partial gas separation of H₂ or H₂-rich gas from the gas mixture takes place, wherein the separated and H₂-enriched gas (40) is recycled to the cathode side (17) of the electrolysis stack (9).

3. The process for generating synthesis gas according to claim 2,
**characterised in that**
a membrane separation system and/or a pressure-swing adsorption system is used as the separating device (39).

4. The process for generating synthesis gas according to one of the preceding claims,
**characterised in that**
the pre-heating takes place using a pre-heater (19, 23) which is part of the catalytic reactor (20, 24).

5. The process for generating synthesis gas according to one of the preceding claims,
**characterised in that**
after feeding to the at least one catalytic reactor (20, 24) promoting the reverse water-gas shift reaction R3 and/or the steam-reforming reaction R4 and/or to the at least one coke-filled vessel (20, 24) in which the reactions R5 and/or R6 and/or R7 proceed, a feeding additionally takes place by way of
- an all-ceramic stack (35) which is operated at higher temperatures than the stack (9), the all-ceramic stack (35) having smaller dimensions than the first electrolysis stack (9)
or
- a second electrolysis stack (46), which is operated at the same temperature level as the first electrolysis stack (9).

6. The process for generating synthesis gas according to claim 5,
**characterised in that,**
before the gas (18) is fed to the all-ceramic stack (35), the second electrolysis stack (46) or a temperature raising that may be provided and/or an electric heater (34), the gas (18) is fed to a gas separation device (43) that is suitable for higher temperatures, wherein a fraction of CO and H₂ of more than 0% to 100% is separated off as a gas (44, 49) from the gas (18) to be fed to the all-ceramic stack (35), the second electrolysis stack (46) or the temperature raising that may be provided and/or the electric heater (34), and is made available for further processing as a synthesis gas (30) together with the gas (47, 50) generated from the all-ceramic stack (46) or the second electrolysis stack (46).

7. The process for generating synthesis gas according to claim 6,
**characterised in that**
a ceramic membrane is used as the gas separation device (43).

8. A synthesis gas generating arrangement for generating synthesis gas from CO₂ and H₂O by the process for generating synthesis gas according to one of the preceding claims,
**wherein the arrangement comprises:**
at least one electrolysis stack (9) and, arranged downstream of the electrolysis stack (9), at least one catalytic reactor (20, 24) promoting the reverse water-gas shift reaction R3 and the steam-reforming reaction R4 and/or at least one coke-filled vessel (20, 24) promoting the reactions R5 and R6 and R7,
wherein an electric heater (7, 19, 23, 34, 51) is provided upstream of the electrolysis stacks (9, 35, 46, 53) and/or upstream of or in the catalytic reactor (20, 24) and/or coke-filled vessel (20, 24).

9. The synthesis gas generating arrangement according to claim 8,
**characterised in that**
upstream of the electrolysis stacks (9, 35, 46, 53) and/or upstream of or in the catalytic reactor (20, 24) and/or coke-filled vessel (20, 24), a recuperator (6, 48, 55) or a further temperature-raising arrangement is provided in addition to the electric heater (7, 19, 23, 34, 51).

## Revendications

1. Procédé de production de gaz de synthèse à partir de CO₂ et de H₂O avec une co-électrolyse (9), la teneur en CO₂ et/ou en CH₄ du gaz produit (18) étant réduite côté cathode (17),
**caractérisé en ce que**
à cet effet, après la co-électrolyse (9), le gaz (18) côté cathode, lequel contient du H₂, du CO, de la vapeur d'eau non transformée et du CO₂ ainsi que du CH₄, est amené en outre à au moins un réacteur catalytique (20, 24) favorisant la réaction inverse du gaz à l'eau R3 et la réaction de vaporeformage R4 et/ou à au moins un récipient (20, 24) rempli de coke favorisant les réactions R5 et R6 et R7 :
où
R3 : CO₂ + H₂ → CO + H₂O
R4 : CH₄ + H₂O → CO + 3 H₂
R5 : CO₂ + C → 2 CO
R6 : H₂O + C → CO + H₂
R7 : 2 H₂ + C → CH₄
un préchauffage étant réalisé, lors de l'alimentation vers le au moins un réacteur catalytique (20, 24) et/ou le au moins un récipient (20, 24) rempli de coke, au moyen d'au moins un dispositif de chauffage (19, 23) fonctionnant à l'énergie électrique.

2. Procédé de production de gaz de synthèse selon la revendication 1,
**caractérisé en ce que**
après le ou les réacteurs catalytiques et/ou le ou les récipients (20, 24) remplis de coke, une séparation partielle du gaz H₂ ou riche en H₂ provenant du mélange gazeux a lieu après un refroidissement (6, 26) du gaz (25), le gaz séparé et enrichi en H₂ (40) étant recyclé côté cathode (17) de la pile d'électrolyse (9).

3. Procédé de production de gaz de synthèse selon la revendication 2,
**caractérisé en ce que**
une installation de séparation par membrane et/ou une installation d'adsorption par inversion de pression est utilisée comme dispositif de séparation (39).

4. Procédé de production de gaz de synthèse selon l'une des revendications précédentes,
**caractérisé en ce que**
le préchauffage est effectué au moyen d'un dispositif de préchauffage (19, 23) qui est un composant du réacteur catalytique (20, 24).

5. Procédé de production de gaz de synthèse selon l'une des revendications précédentes,
**caractérisé en ce que**
après l'alimentation de l'au moins un réacteur catalytique (20, 24) favorisant la réaction inverse du gaz à l'eau R3 et/ou la réaction de vaporeformage R4 et/ou de l'au moins un récipient (20, 24) rempli de coke dans lequel les réactions R5 et/ou R6 et/ou R7 ont lieu, une alimentation supplémentaire est réalisée via
- une pile entièrement en céramique (35) fonctionnant à des températures plus élevées que la pile (9), la pile entièrement en céramique (35) ayant des dimensions plus petites que la première pile d'électrolyse (9)
ou
- une deuxième pile d'électrolyse (46) fonctionnant au même niveau de température que la première pile d'électrolyse (9).

6. Procédé de production de gaz de synthèse selon la revendication 5,
**caractérisé en ce que,**
avant que le gaz (18) ne soit amené à la pile entièrement en céramique (35), à la deuxième pile d'électrolyse (46) ou à une éventuelle augmentation de température prévue et/ou à un dispositif de chauffage électrique (34), le gaz (18) est amené à un dispositif de séparation de gaz (43) convenant à des températures plus élevées, une proportion de CO et de H2 supérieure à 0 % et allant jusqu'à 100 % est séparée sous forme de gaz (44, 49) du gaz à amener à la pile entièrement en céramique (35), à la deuxième pile d'électrolyse (46) ou à l'éventuelle augmentation de température et/ou au dispositif de chauffage électrique (34), et ladite proportion est mise à disposition en tant que de gaz de synthèse (30) avec le gaz (47, 50) produit dans la pile entièrement en céramique (46) ou dans la deuxième pile d'électrolyse (46) en vue d'un traitement supplémentaire.

7. Procédé de production de gaz de synthèse selon la revendication 6,
**caractérisé en ce que**
une membrane céramique est utilisée comme dispositif de séparation de gaz (43).

8. Dispositif de production de gaz de synthèse pour produire du gaz de synthèse à partir de CO₂ et H₂O par le procédé de production de gaz de synthèse selon l'une des revendications précédentes,
**ledit dispositif comprenant :**
au moins une pile d'électrolyse (9) et, disposés en aval de la pile d'électrolyse (9), au moins un réacteur catalytique (20, 24) favorisant la réaction inverse du gaz à l'eau R3 et la réaction de vaporeformage R4 et/ou au moins un récipient (20, 24) rempli de coke favorisant les réactions R5 et R6 et R7, un dispositif de chauffage électrique (19, 23) étant prévu en amont ou dans le réacteur catalytique (20, 24) et/ou le récipient (20, 24) rempli de coke.

9. Dispositif de production de gaz de synthèse selon la revendication 8,
**caractérisé en ce que**
il est prévu, en amont de la pile d'électrolyse (9) et/ou en amont ou dans le réacteur catalytique (20, 24) et/ou le récipient rempli (20, 24) de coke, un récupérateur ou un autre dispositif d'élévation de température en plus du dispositif de chauffage électrique (19, 23).
